(19) Europäisches Patentamt
European Patent Office
Office européen des brevets

(11) **EP 3 729 037 B1**

(12) **EUROPÄISCHE PATENTSCHRIFT**

(45) Veröffentlichungstag und Bekanntmachung des Hinweises auf die Patenterteilung:
**30.10.2024  Patentblatt 2024/44**

(21) Anmeldenummer: **18803958.0**

(22) Anmeldetag: **15.11.2018**

(51) Internationale Patentklassifikation (IPC):
**G01L 27/00** (2006.01)    **G01D 18/00** (2006.01)

(52) Gemeinsame Patentklassifikation (CPC):
**G01L 27/002**

(86) Internationale Anmeldenummer:
**PCT/EP2018/081288**

(87) Internationale Veröffentlichungsnummer:
**WO 2019/120776 (27.06.2019 Gazette 2019/26)**

(54) **VERFAHREN ZUM BEREITSTELLEN VON KALIBRIERTEN DRUCKMESSUMFORMERN**

METHOD FOR PROVIDING CALIBRATED PRESSURE TRANSDUCERS

PROCÉDÉ PERMETTANT D'OBTENIR DES CONVERTISSEURS DE DONNÉES DE MESURE ÉTALONNÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2017  DE 102017131066**

(43) Veröffentlichungstag der Anmeldung:
**28.10.2020  Patentblatt 2020/44**

(73) Patentinhaber: **Endress+Hauser SE+Co. KG**
**79689 Maulburg (DE)**

(72) Erfinder:
• **KARWECK, Lars**
**79589 Binzen (DE)**
• **SCHLACHTER, Marc Andreas**
**79664 Wehr (DE)**
• **BLANSCHE, Christian**
**79618 Rheinfelden (DE)**
• **TRUNZER, Wolfgang**
**79540 Lörrach (DE)**
• **RUHNAU, Andreas**
**79650 Schopfheim (DE)**

(74) Vertreter: **Hahn, Christian et al**
**Endress+Hauser Group Services (Deutschland)AG +Co. KG**
**Colmarer Straße 6**
**79576 Weil am Rhein (DE)**

(56) Entgegenhaltungen:
WO-A2-2014/160912    US-A1- 2008 110 236
US-A1- 2008 110 236    US-A1- 2013 317 772
US-A1- 2013 317 772    US-A1- 2017 023 428
US-A1- 2017 023 428

• SVINOLUPOV YU G ET AL: "Pressure control devices with the microprocessor error correction", MODERN TECHNIQUES AND TECHNOLOGIES, 2003. MTT 2003. PROCEEDINGS OF THE 9TH INTERNATIONAL SCIENTIFIC AND PRACTICAL CONFERENCE OF STUDENTS, PO ST-GRADUATES AND YOUNG SCIENTISTS TOMSK, RUSSIA 7-11 APRIL 2003, PISCATAWAY, NJ, USA,IEEE, US, 7 April 2003 (2003-04-07), pages 64 - 66, XP010806785, ISBN: 978-0-7803-7669-4, DOI: 10.1109/SPCMTT.2003.1438132

• SVINOLUPOV YU G ET AL: "Pressure control devices with the microprocessor error correction", MODERN TECHNIQUES AND TECHNOLOGIES, 2003. MTT 2003. PROCEEDINGS OF THE 9TH INTERNATIONAL SCIENTIFIC AND PRACTICAL CONFERENCE OF STUDENTS, PO ST-GRADUATES AND YOUNG SCIENTISTS TOMSK, RUSSIA 7-11 APRIL 2003, PISCATAWAY, NJ, USA,IEEE, US, 7 April 2003 (2003-04-07), pages 64 - 66, XP010806785, ISBN: 978-0-7803-7669-4, DOI: 10.1109/SPCMTT.2003.1438132

EP 3 729 037 B1

**Beschreibung**

Die vorliegende Erfindung betrifft ein Verfahren zum Bereitstellen von kalibrierten Druckmessumformern.

Druckmessumformer weisen ein Sensormodul, einen Prozessanschluss und ein mit dem Prozessanschluss gekoppeltes Elektronikmodul aufweist; wobei das Sensormodul ein Sensormodulgehäuse, eine Messschaltung, einen Drucksensor mit einem Verformungskörper, insbesondere in Form einer Messmembran, und einem Messwandler zum Bereitstellen eines ersten analogen Primärsignals, und eines zweiten analogen Primärsignals, der mit dem Verformungskörper funktional verbunden ist, wobei der Drucksensor und die Messschaltung in dem Gehäuse angeordnet sind; wobei der Verformungskörper mit einem Druck beaufschlagbar ist, wobei das erste Primärsignal S1 eine erste Abhängigkeit von einer druckabhängigen Verformung des Verformungskörpers und einer Temperatur des Drucksensors aufweist, wobei das zweite Primärsignal S2 eine zweite Abhängigkeit von der druckabhängigen Verformung des Verformungskörpers und der Temperatur des Drucksensors aufweist, die von der ersten Abhängigkeit abweicht, wobei die Messschaltung dazu eingerichtet ist, abhängig von dem ersten Primärsignal S1 und dem zweiten Primärsignal S2, einen Sensormesswert pS(S1, S2) zu ermitteln und an einer Sensormodulschnittstelle bereitzustellen; wobei das Elektronikmodul ein Elektronikgehäuse und eine Signalisierungsschaltung aufweist, welche in dem Elektronikgehäuse angeordnet ist, eine Elektronikmodulschnittstelle zum Empfangen des Sensormesswerts pS von der Sensormodulschnittstelle und eine Signalisierungsschnittstelle zum Ausgeben eines Messwertsignals SM(pS) in Abhängigkeit von dem empfangenen Sensormesswert aufweist. Derartige Druckmessumformer sind beispielsweise von Endress+Hauser unter den Bezeichnungen Cerabar, Deltabar, und Deltapilot erhältlich.

Das Dokument US2017/0023428A1 offenbart einen Impedanzsensor mit einer elektronischen Signalverarbeitungeinheit und eine Kompensationseinheit.

Der modulare Aufbau der Druckmessumformer bietet die Gelegenheit, für verschiedene Messaufgaben und Einsatzorte geeignete Kombinationen von Sensormodulen und Elektronikmodulen zu kombinieren, wobei die meisten Druckmessumformer dazu eingerichtet sind ein analoges Messwertsignal, insbesondere als Stromsignal zwischen 4 und 20 mA auszugeben. Als Nachweis der Messgenauigkeit ist ein Kalibrierprotokoll erforderlich, welches vom Elektronikmodul ausgegebene Messwertsignale definierten Druckwerten $p_i$ zuordnet, mit denen das Sensormodul bei der Kalibrierung beaufschlagt wurde.

Insofern, als die Fertigung und Kompensation von Sensormodulen einerseits und die Fertigung von Elektronikmodulen andererseits getrennt erfolgen, und die Kombination eines Elektronikmoduls mit einem Sensormodul in einer Endmontage ein weiterer, unabhängiger Vorgang ist, erfordert die Kalibrierung des Druckmessumformers, die eine gemessene Beziehung zwischen anliegenden Druckwerten und tatsächlich ausgegebenen Messwertsignalen dokumentiert, einen großen logistischen Aufwand.

Es ist daher die Aufgabe der vorliegenden Erfindung, hier Abhilfe zu schaffen. Die Aufgabe wird erfindungsgemäß gelöst durch das Verfahren gemäß dem unabhängigen Patentanspruch 1.

Das erfindungsgemäße Verfahren dient zum Bereitstellen von kalibrierten Druckmessumformern, wobei ein verfahrensgemäß bereitgestellter Druckmessumformer ein Sensormodul, einen Prozessanschluss und ein mit dem Prozessanschluss gekoppeltes Elektronikmodul aufweist; wobei das Sensormodul ein Sensormodulgehäuse, eine Messschaltung, einen Drucksensor mit einem Verformungskörper, insbesondere in Form einer Messmembran, und einem Messwandler zum Bereitstellen eines ersten analogen Primärsignals, und eines zweiten analogen Primärsignals, der mit dem Verformungskörper funktional verbunden ist, wobei der Drucksensor und die Messschaltung in dem Gehäuse angeordnet sind; wobei der Verformungskörper mit einem Druck beaufschlagbar ist, wobei das erste Primärsignal S1 eine erste Abhängigkeit von einer druckabhängigen Verformung des Verformungskörpers und einer Temperatur des Drucksensors aufweist, wobei das zweite Primärsignal S2 eine zweite Abhängigkeit von der druckabhängigen Verformung des Verformungskörpers und der Temperatur des Drucksensors aufweist, die von der ersten Abhängigkeit abweicht, wobei die Messschaltung dazu eingerichtet ist, abhängig von dem ersten Primärsignal S1 und dem zweiten Primärsignal S2, einen Sensormesswert pS(S1, S2) zu ermitteln und an einer Sensormodulschnittstelle bereitzustellen; wobei das Elektronikmodul ein Elektronikgehäuse und eine Signalisierungsschaltung aufweist, welche in dem Elektronikgehäuse angeordnet ist, eine Elektronikmodulschnittstelle zum Empfangen des Sensormesswerts pS von der Sensormodulschnittstelle und eine Signalisierungsschnittstelle zum Ausgeben eines Messwertsignals SM(pS) in Abhängigkeit von dem empfangenen Sensormesswert aufweist;
wobei das Verfahren umfasst:

Kalibrieren des Sensormoduls,

wobei das Kalibrieren des Sensormoduls umfasst:

Beaufschlagen des Sensormoduls mit mehreren definierten Druckwerten $p_i$ und Erfassen der von dem Sensormodul ausgegebenen Sensormesswerte pS($p_i$); und

Speichern von Sensorkalibrierdaten, wobei die Sensorkalibrierdaten bei der Kalibrierung angelegte Druckwerte $p_i$ und die zugehörigen Sensormesswerte $pS(p_i)$ umfassen;

separates Kalibrieren eines dem Sensormodul zugeordneten Elektronikmoduls,

wobei das Kalibrieren des Elektronikmoduls umfasst:

Verbinden einer Schnittstelle des Elektronikmoduls mit einer Kalibriersignalquelle, wobei die Schnittstelle des Elektronikmoduls beispielsweise eine so genannte Fertigungsschnittstelle oder die Elektronikmodulschnittstelle sein kann;

Ausgeben der aufgezeichneten Sensormesswerte pS der Sensorkalibrierdaten an die Elektronikmodulschnittstelle mittels der Kalibriersignalquelle;

Erfassen von Messwertsignalen SM(pS), insbesondere bei Raumtemperatur, an der Signalisierungsschnittstelle; und

Erstellen eines Kalibrierprotokolls, welches die bei der Kalibrierung des Elektronikmoduls erfassten Messwertsignale den definierten Druckwerten $p_i$ zuordnet, mit denen das Sensormodul bei der Sensorkalibrierung beaufschlagt wurde.

In einer Weiterbildung der Erfindung wird der Sensormesswert als ein digitales Signal an der Sensormodulschnittstelle ausgegeben.

In einer Weiterbildung der Erfindung ist das Messwertsignal ein Stromsignal, insbesondere ein 4 ... 20 mA Stromsignal.

In einer Weiterbildung der Erfindung umfasst das Verfahren weiterhin das Verbinden des Elektronikmoduls mit dem Sensormodul, insbesondere Verbinden der Sensormodulschnittstelle mit der Elektronikmodulschnittstelle und/oder Montieren des Elektronikgehäuses an dem Sensormodulgehäuse.

In einer Weiterbildung der Erfindung umfasst das Verfahren weiterhin das Kompensieren des Sensormoduls, wobei das Kompensieren vor dem Kalibrieren des Sensormoduls erfolgt.

In einer In einer Weiterbildung der Erfindung umfasst das Verfahren weiterhin das Montieren eines Prozessanschlusses; und das Nachjustieren des Sensormoduls;
Wobei das Montieren eines Prozessanschlusses und das Nachjustieren zwischen dem Kompensieren und dem Kalibrieren des Sensormoduls erfolgt.

In einer Weiterbildung der Erfindung umfasst das Kompensieren des Sensormoduls:

Einbringen des Sensormoduls in eine Kompensationsvorrichtung;

Beaufschlagen mindestens eines Sensormoduls mit mehreren Druckwerten $p_i$ bei mehreren Temperaturen $T_j$;

Erfassen der zugehörigen ersten und zweiten Primärsignale $S1(p_i, T_j)$ und $S2(p_i, T_j)$;

Ermitteln einer Wandlerübertragungsfunktion $W(S1, S2)$ auf Basis der erfassten Signale zum Berechnen von Sensormesswerten;

$$pS(S1, S2) = W(S1(p, T), S2(p, T))$$

so dass für alle i, j der Sensormesswert $pS(S1(p_i, T_j), S2(p_i, T_j))$ bis auf einen spezifizierten Toleranzwert dp1 einer vorgegebenen linearen Sensorübertragungsfunktion $S(p)$ des Drucks p entspricht, mit dem der Drucksensor beaufschlagt wurde, wobei $S(p) = a_s * p + S_0$;

Implementieren der ermittelten Wandlerübertragungsfunktion $W(S1, S2)$ in der Messschaltung; und

Entfernen des Sensormoduls aus der Kompensationsvorrichtung.

In einer Weiterbildung der Erfindung umfasst das Nachjustieren des Sensormoduls:

Montieren des Sensormoduls mittels des Prozessanschlusses an einer Sensormodulkalibrierstation;

Beaufschlagen des Sensormoduls mit mindestens zwei Druckwerten $p_i$, Erfassen der zugehörigen Sensormesswerte $pS(p_i)$; und

Ermitteln und Implementieren einer nachjustierten Wandlerübertragungsfunktion W(S1, S2) bzw. W(S1, S2, ST) in der Messschaltung so dass die Sensormesswerte $pS(p_i)$ für die mindestens zwei Druckmesswerte $p_i$ bis auf einen Toleranzwert dp2 der vorgegebenen Sensorübertragungsfunktion $S(p) = a_s * p + S_0$; entsprechen.

In einer Weiterbildung der Erfindung erfolgt das Kalibrieren des Sensormoduls in der Sensormodulkalibrierstation erfolgt durch

erneutes Beaufschlagen des Sensormoduls mit mindestens zwei Druckwerten $p_i$; Erfassen der zugehörigen Sensormesswerte $pS(p_i)$;
und Speichern der Kalibrierdaten mit den Wertepaaren $p_i$, $pS(p_i)$ in einem Datenspeicher.

In einer Weiterbildung der Erfindung wird das Drucksensormodul über mindestens zwei definierte Messbereiche kompensiert und/oder kalibriert.
wobei sich ein erster Messbereich von einem zweiten Messbereich hinsichtlich der Spanne unterscheidet, und/oder wobei sich die mittlere Druckdifferenz zwischen den bei der Kalibrierung des Sensormoduls verwendeten Druckwerten im ersten Messbereich von der mittleren Druckdifferenz zwischen den bei der Kalibrierung des Sensormoduls verwendeten Druckwerten im zweiten Messbereich unterscheidet.
Die Erfindung wird nun anhand des in den Zeichnungen dargestellten Ausführungsbeispiels näher erläutert. Es zeigt:

Fig. 1: Eine schematische Darstellung eines Ausführungsbeispiels eines mittels des erfindungsgemäßen Verfahrens bereitgestellten Druckmessumformers;
Fig. 2: Eine schematische Darstellung eines Ausführungsbeispiels eines Drucksensors eines mittels des erfindungsgemäßen Verfahrens bereitgestellten Druckmessumformers; und
Fig. 3: Ein Flussdiagramm eines Ausführungsbeispiels des erfindungsgemäßen Verfahrens.

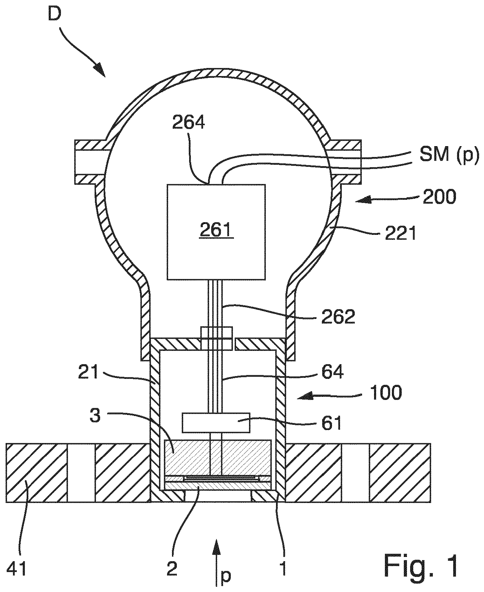

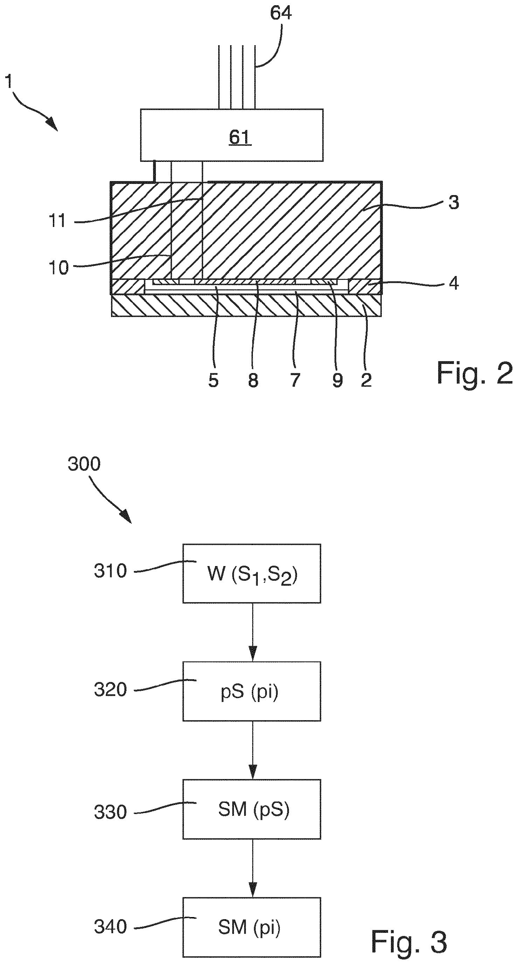

Der in Fig. 1 dargestellte Druckmessumformer D umfasst ein Drucksensormodul 100 und ein Elektronikmodul 200, das auf dem Drucksensormodul montiert ist.
Das Drucksensormodul 100 umfasst einen Drucksensor 1, ein Gehäuse 21, einen Prozessanschluss 41 und eine Messschaltung 61. Der Drucksensor 1 umfasst, wie näher in Fig. 2 dargestellt, einen Verformungskörper in Form einer kreisscheibenförmige, keramische Messmembran 2, die mit einem erheblich steiferen kreisplattenförmigen, keramischen Gegenkörper 3 entlang einer umlaufenden Fügestelle 4 unter Bildung einer Messkammer 5 zwischen dem Gegenkörper 3 und der Messmembran 2 druckdicht gefügt ist. Der Drucksensor umfasst einen kapazitiven Messwandler mit zwei Kondensatoren die, zwei durch die druck- und temperaturabhängigen Kapazitäten bestimmte Primärsignale S1, S2 ausgeben. Hierzu weist die Messmembran 2 auf ihrer gegenkörperseitigen Oberfläche eine vollflächige Membranelektrode 7 auf, die beispielsweise eine Metallschicht umfasst, Auf der messmembranseitigen Oberfläche des Gegenkörpers ist eine zentrale, kreisflächenförmige Messelektrode 8 angeordnet, die von einer bezüglich der Membranelektrode 7 in der Ruhelage der Messmembran 2 im wesentlichen kapazitätsgleichen kreisringförmigen Referenzelektrode 9 umgeben ist. Die Referenzelektrode 9 und die Messelektrode 8 sind über metallische Durchführungen 10, 11 durch den Grundkörper mit der Messschaltung 61 verbunden. Die Membranelektrode 7 kann beispielsweise über die Fügestelle auf Schaltungsmasse gelegt sein.
Die Messschaltung 61 treibt die Elektroden und verarbeitet deren Signale. Ein erstes der Primärsignale S1 repräsentiert eine Messkapazität $c_p$ zwischen der Messelektrode 8 und der Membranelektrode 7, während ein zweites der Primärsignale S2 eine Referenzkapazität $c_r$ zwischen der Referenzelektrode 8 und der Membranelektrode 7 repräsentiert.
Die Primärsignale gehen beispielsweise in Form von Hilfsgrößen H1 = (S1-S2) / S1 und H2 = S2 als Argumente in eine Übertragungsfunktion W(S1,S2) ein, für die also gilt W(S1, S2) := V(H1,H2), wobei die Hilfsübertragungsfunktion V(H1, H2) insbesondere ein Polynom in H1 und H2. Gegebenenfalls weisen die Übertragungsfunktion W(S1, S2) und die Hilfsübertragungsfunktion noch temperaturabhängige Terme auf, die von dem Signal eines zusätzlichen Temperatursensors abhängen, der eine Temperatur des Gegenkörpers erfasst. Mittels der Übertragungsfunktion berechnet die Messschaltung 61 einen digitale auszugebenden Sensormesswert pS und stellt diese an einer Sensormodulschnittstelle 64 bereit.
Beim Kompensieren des Drucksensors, wird der Drucksensor mit einen Feld von Druckwerten über eine Für den Drucksensor definierte Messspanne bei zwei oder mehr Temperaturen über einen für den Drucksensor definierten Temperatureinsatzbereich beaufschlagt, um beispielsweis Koeffizienten für die Funktion V(H1,H2) zu bestimmen, so dass für alle Druckwerte $p_i$ der jeweils berechnete Sensormesswert $pS(p_i) = W(S1(p_i, T_j), S2(p_i, T_j))$ bzw. $pS(p_i) = V(H1(p_i, T_j), H2(p_i, T_j))$ bis auf einen spezifizierte Toleranzwert dem angelegten Druckwert p; entspricht. Je nach Zahl der Koeffizienten in den Funktionen kann dies beispielsweise fünf bis zehn Druckwerte bei jeweils drei bis fünf verschiedenen Temperaturen erfordern. Die ermittelten Koeffizienten werden in einem Speicher der Messchaltung hinterlegt um die somit die ermittelte Übertragungsfunktion zu implementieren.

Zweckmäßig wird eine Vielzahl von Sensormodulen (100) synchron in einer Kompensationsanlage kompensiert, die einen vergleichsweise kompakten Aufbau haben kann, da nur die Sensormodule ohne Elektronikmodul und vorzugsweise auch ohne Prozessanschluss kompensiert werden.

In einem späteren Fertigungsschritt kann an einem Sensormodul 100 ein Prozessanschluss 41 montiert werden, welcher beispielsweise als Flansch ausgebildet ist und mit dem Gehäuse 21 durch eine stirnseitige Schweißnaht verbunden ist, wie in Fig. 1 dargestellt. Das Schweißen soll zwar rückwirkungsarm erfolgen, aber völlig ohne Auswirkungen auf die Übertragungsfunktion ist dies kaum möglich. Wenn diese Auswirkungen korrigiert werden sollen, reicht eine Zweipunktmessung bei Raumtemperatur bei beispielsweise am Nullpunkt und an einer spezifizierten oberen Messbereichsgrenze aus, um dann beispielsweise eine korrigierte Konstante und einen korrigierten Koeffizienten eines linearen Terms in H1 zu ermitteln, mit denen die implementierte Übertragungsfunktion nachzujustieren ist. Hierzu ist das Drucksensormodul in einer in einer Kalibrierstation mit den beiden Druckwerten zu beaufschlagen, und die Abweichungen der Sensormesswerte $pS(p_i)$ von den $p_i$ sind zu erfassen.

Zweckmäßig wird unmittelbar im Anschluss an die Implementierung nachjustierten Übertragungsfunktion eine Kalibrierung durchgeführt, wozu das Drucksensormodul mit mehreren Druckwerten $p_i$ beaufschlagt wird, und die zugehörigen Sensormesswerte $pS(p_i)$ in einer Kalibrierdatenbank erfasst werden. Damit ist die tatsächlich erzielte Messgenauigkeit eines ersten Teils eines Signalpfades durch den Messumformer dokumentiert.

Das Drucksensormodul wurde zuvor mit einem Drucksensor mit kapazitivem Wandler beschrieben. Grundsätzlich können auch beliebige andere Wandlerprinzipien zum Einsatz kommen zum Beispiel (piezo-)resistive Wandler insbesondere in Form einer Vollbrückenschaltung bei denen die Diagonalspannung ein in erster Näherung druckproportionales erstes Signal S1 bildet und die Längsspannung ein im Wesentlichen temperaturabhängiges zweites Signal S2 bildet. Die Art des Wandlers ändert nichts daran, dass nach der Kalibrierung des Sensormoduls ein Kalibrierdatensatz $pS(p_i)$ bereitgestellt ist.

Ein Elektronikmodul dient bei Feldgeräten der Prozessmesstechnik im Wesentlichen dazu, die Sensormesswerte in einem Format zu signalisieren, das in der jeweiligen Prozessanlage verwendet wird. Hierzu weist ein Elektronikmodul 200 ein Gehäuse 221 und eine Kommunikationsschaltung 261 auf, die in dem Gehäuse angeordnet ist. Die Kommunikationsschaltung 261 des betriebsbereiten Druckmessumformers ist mittels einer Elektronikmodulschnittstelle 262 an eine Sensormodulschnittstelle 64 des Sensormoduls 100 angeschlossen um in Abhängigkeit von den Sensormesswerten pS ein Messwertsignal SM(pS) zu ermitteln und dieses an ihrer Signalisierungsschnittstelle 264 auszugeben. Vorliegend ist die Kommunikationsschaltung dazu eingerichtet, zunächst einen Stromwert zu berechnen der den Sensormesswert repräsentiert, und dann ein Gleichstromsignal zu stellen, welches dem berechneten Stromwert entspricht, beispielsweise im Wertebereich 4 ... 20 mA.

Um zu überprüfen und zu dokumentieren, dass eine Gesamtübertragungsfunktion des Druckmessumformers zu korrekten Messwertsignalen führt, wird erfindungsgemäß ein zweiter Teil des Signalpfads, der durch die Kommunikationsschaltung realisiert ist, unabhängig vom Sensormodul aber mit den bei der Kalibrierung des Sensormoduls ermittelten Sensormesswerten $pS(p_i)$ durchgeführt. Dazu wird die Elektronikmodulschnittstelle an eine Kalibriersignalquelle angeschlossen, über welche die Kommunikationsschaltung mit den bei der Kalibrierung des Sensormoduls aufgezeichneten Sensormesswerten $pS(p_i)$ beaufschlagt werden. Die an der Kommunikationsschnittstelle 264 ausgegebenen Messwertsignale $SM(pS(p_i))$, werden erfasst und als Wertepaare $SM(p_i)$, $p_i$ in einem Kalibrierprotokoll aufgezeichnet.

Damit ist der Messgenauigkeit des kompletten Signalpfads dokumentiert, ohne dass der komplette Signalpfad jemals durchgängig getestet werden musste. Dies bedingt im Ergebnis eine große logistische Vereinfachung und Kostenreduzierung bei der Bereitstellung von kalibrierten Messumformern, ohne hinsichtlich der Validität der Kalibrierung Kompromisse eingehen zu müssen.

Der Ablauf einer Ausführungsform des erfindungsgemäßen Verfahrens soll nochmals kurz anhand von Fig. 3 zusammengefasst werden.

Zunächst erfolgt das Kompensieren 310 des Sensormoduls mit dem Implementieren der Übertragungsfunktion W(S1, S2) in der Messschaltung des Sensormoduls, welche in Abhängigkeit von Primärsignalen S1,S2, Sensormesswerte pS generiert.

Bei einer späteren Sensorkalibrierung 320 werden an der Sensormodulschnittstelle bereitgestellte Sensormesswerte $pS(p_i)$ als Funktion von anliegenden Druckwerten $p_i$ erfasst und in einer Kalibrierdatenbank gespeichert.

Bei einer späteren Elektronikmodulkalibrierung 330 werden an der Signalisierungsschnittstelle bereitgestellte Messwertsignalen SM(pS) als Funktion von mittels einer Kalibriersignalquelle angelegten Sensormesswerte pS erfasst und in einer Kalibrierdatenbank gespeichert, wobei die angelegten Sensormesswerte den $pS(p_i)$ der Sensorkalibrierung entsprechen.

Schließlich folgt die Kalibrierprotokollerstellung (340) in welchem den bei der Sensorkalibrierung anliegenden Druckwerten $p_i$ die bei der Elektronikmodulkalibrierung 330) ermittelten Messwertsignale $SM(pS(p_i))$ zugeordnet werden.

## Patentansprüche

1. Verfahren zum Kalibrieren von Druckmessumformern (D),

wobei ein verfahrensgemäß kalibrierter Druckmessumformer (D) ein Sensormodul (100) mit einem Prozessanschluss (41) und ein mit dem Sensormodul (100) gekoppeltes Elektronikmodul (200) aufweist;
wobei das Sensormodul (100) ein Sensormodulgehäuse (21), eine Messschaltung (61), einen Drucksensor (1) mit einem Verformungskörper (2) und einem Messwandler zum Bereitstellen eines ersten analogen Primärsignals, und eines zweiten analogen Primärsignals, der mit dem Verformungskörper (1) funktional verbunden ist, wobei der Drucksensor (1) und die Messschaltung (61) in dem Gehäuse (21) angeordnet sind;
wobei der Verformungskörper (2) mit einem Druck beaufschlagbar ist, wobei das erste Primärsignal S1 eine erste Abhängigkeit von einer druckabhängigen Verformung des Verformungskörpers (2) und einer Temperatur des Drucksensors (1) aufweist, wobei das zweite Primärsignal S2 eine zweite Abhängigkeit von der druckabhängigen Verformung des Verformungskörpers und der Temperatur des Drucksensors aufweist, die von der ersten Abhängigkeit abweicht,
wobei die Messschaltung (61) dazu eingerichtet ist, abhängig von dem ersten Primärsignal S1 und dem zweiten Primärsignal S2, einen Sensormesswert pS(S1, S2) zu ermitteln und an einer Sensormodulschnittstelle bereitzustellen;
wobei das Elektronikmodul (200) ein Elektronikgehäuse (221) und eine Kommunikationsschaltung (261) mit einer Signalisierungsschnittstelle (264) aufweist, welche Kommunikationsschaltung (261) in dem Elektronikgehäuse (221) angeordnet ist, und welche mittels einer Elektronikmodulschnittstelle (262) zum Empfangen des Sensormesswerts pS von der Sensormodulschnittstelle (64) an die Sensormodulschnittstelle (64) angeschlossen ist, um in Abhängigkeit von den Sensormesswerten pS ein Messwertsignal SM(pS) zu ermitteln und an die Signalisierungsschnittstelle (264) zum Ausgeben eines Messwertsignals SM(pS) in Abhängigkeit von dem empfangenen Sensormesswert auszugeben;
dadurch gegenzeichnet dass, das Verfahren umfasst:

Kalibrieren (320) des Sensormoduls (100), wobei das Kalibrieren des Sensormoduls (100) umfasst: Beaufschlagen des Sensormoduls mit mehreren definierten Druckwerten $p_i$ und Erfassen der von dem Sensormodul ausgegebenen Sensormesswerte pS(pi); und Speichern von Sensorkalibrierdaten, wobei die Sensorkalibrierdaten bei der Kalibrierung angelegte Druckwerte $p_i$ und die zugehörigen Sensormesswerte pS(pi) umfassen;
separates Kalibrieren (320) eines dem Sensormodul (100) zugeordneten Elektronikmoduls (200), wobei das Kalibrieren des Elektronikmoduls (200) umfasst: Verbinden einer Schnittstelle des Elektronikmoduls (200) mit einer Kalibriersignalquelle; Ausgeben der aufgezeichneten Sensormesswerte pS der Sensorkalibrierdaten an die Elektronikmodulschnittstelle mittels der Kalibriersignalquelle; Erfassen von Messwertsignalen SM(pS) an der Signalisierungsschnittstelle; und
Erstellen eines Kalibrierprotokolls (340), welches die bei der Kalibrierung des Elektronikmoduls erfassten Messwertsignale SM(pS(pi)) den definierten Druckwerten $p_i$ zuordnet, mit denen das Sensormodul bei der Sensorkalibrierung beaufschlagt wurde.

2. Verfahren nach Anspruch 1, wobei der Sensormesswert als ein digitales Signal an der Sensormodulschnittstelle ausgegeben wird.

3. Verfahren nach Anspruch 1 oder 2, wobei das Messwertsignal ein Stromsignal ist, insbesondere ein 4 ... 20 mA Stromsignal.

4. Verfahren nach einem der vorhergehenden Ansprüche, weiterhin umfassend: Verbinden des Elektronikmoduls mit dem Sensormodul, insbesondere Verbinden der Sensormodulschnittstelle mit der Elektronikmodulschnittstelle und/oder Montieren des Elektronikgehäuses an dem Sensormodulgehäuse.

**5.** Verfahren nach einem der vorhergehenden Ansprüche, weiterhin umfassend:

Kompensieren des Sensormoduls, wobei das Kompensieren vor dem Kalibrieren des Sensormoduls erfolgt, wobei das Kompensieren des Sensormoduls umfasst:

Einbringen des Sensormoduls in eine Kompensationsvorrichtung;
Beaufschlagen mindestens eines Sensormoduls mit mehreren Druckwerten $p_i$ bei mehreren Temperaturen $T_j$;
Erfassen der zugehörigen ersten und zweiten Primärsignale $S1(pi, T_j)$ und $S2(p_i, T_j)$;
Ermitteln einer Wandlerübertragungsfunktion $W(S1, S2)$ auf Basis der erfassten Signale zum Berechnen von Sensormesswerten;

$$pS(S1, S2) = W(S1(p, T), S2(p, T))$$

so dass für alle i, j der Sensormesswert $pS(S1 (p_i, T_j), S2(p_i, T_j))$ bis auf einen spezifizierten Toleranzwert $dp1$ einer vorgegebenen linearen Sensorübertragungsfunktion $S(p)$ des Drucks $p$ entspricht, mit dem der Drucksensor beaufschlagt wurde, wobei $S(p) = as * p + S_0$;
Implementieren der ermittelten Wandlerübertragungsfunktion $W(S1, S2)$ in der Messschaltung; und
Entfernen des Sensormoduls aus der Kompensationsvorrichtung.

**6.** Verfahren nach Anspruch 5, weiterhin umfassend:

Montieren eines Prozessanschlusses; und
Nachjustieren des Sensormoduls;
Wobei das Montieren eines Prozessanschlusses und das Nachjustieren zwischen dem Kompensieren und dem Kalibrieren des Sensormoduls erfolgt.

**7.** Verfahren nach Anspruch 6, wobei das Nachjustieren des Sensormoduls umfasst:

Montieren des Sensormoduls mittels des Prozessanschlusses an einer Sensormodulkalibrierstation;
Beaufschlagen des Sensormoduls mit mindestens zwei Druckwerten $p_i$, Erfassen der zugehörigen Sensormesswerte $pS(p_i)$; und
Ermitteln und Implementieren einer nachjustierten Wandlerübertragungsfunktion $W(S1, S2)$ in der Messschaltung so dass die Sensormesswerte $pS(p_i)$ für die mindestens zwei Druckmesswerte $p_i$ bis auf einen Toleranzwert $dp2$ der vorgegebenen Sensorübertragungsfunktion $S(p) = a_s * p + S_0$; entsprechen.

**8.** Verfahren nach Anspruch 7,

wobei das Kalibrieren des Sensormoduls in der Sensormodulkalibrierstation erfolgt durch
erneutes Beaufschlagen des Sensormoduls mit mindestens zwei Druckwerten $p_i$; Erfassen der zugehörigen Sensormesswerte $pS(p_i)$;
und Speichern der Kalibrierdaten mit den Wertepaaren $p_i$, $pS(p_i)$ in einem Datenspeicher.

**9.** Verfahren nach einem der vorhergehenden Ansprüche, wobei das Drucksensormodul über mindestens zwei definierte Messbereiche kompensiert und/oder kalibriert wird,
wobei sich ein erster Messbereich von einem zweiten Messbereich hinsichtlich der Spanne unterscheidet, und/oder
wobei sich die mittlere Druckdifferenz zwischen den bei der Kalibrierung des Sensormoduls verwendeten Druckwerten im ersten Messbereich von der mittleren Druckdifferenz zwischen den bei der Kalibrierung des Sensormoduls verwendeten Druckwerten im zweiten Messbereich unterscheidet.

**Claims**

**1.** A method for calibrating pressure transducers (D),

wherein a pressure transducer (D) calibrated according to the method has a sensor module (100) with a process connection (41) and an electronic module (200) coupled to the sensor module (100);

wherein the sensor module (100) has a sensor module housing (21), a measuring circuit (61), a pressure sensor (1) with a deformation body (2) and a transducer for providing a first analog primary signal and a second analog primary signal, which is functionally connected to the deformation body (1), wherein the pressure sensor (1) and the measuring circuit (61) are arranged in the housing (21);

wherein a pressure can be applied to the deformation body (2), wherein the first primary signal S1 has a first dependency on a pressure-dependent deformation of the deformation body (2) and on a temperature of the pressure sensor (1),

wherein the second primary signal S2 has a second dependency on the pressure-dependent deformation of the deformation body and on the temperature of the pressure sensor, which is different from the first dependency,

wherein the measuring circuit (61) is configured to determine a sensor measured value pS(S1, S2) depending on the first primary signal S1 and the second primary signal S2 and to provide it to a sensor module interface;

wherein the electronic module (200) has an electronic housing (221) and a communication circuit (261) with a signaling interface (264), said communication circuit (261) being arranged in the electronic housing (221) and being connected to the sensor module interface (64) by means of an electronic module interface (262) for receiving the sensor measured value pS from the sensor module interface (64), in order to determine a measured value signal SM(pS) based on the sensor measured values pS and to issue it to the signaling interface (264) in order to issue a measured value signal SM(pS) based on the received sensor measured value;

**characterized in that** the method comprises: Calibrating (320) the sensor module (100), wherein the calibration of the sensor module (100) comprises: Applying multiple defined pressure values Pi to the sensor module and recording the sensor measured values pS(pi) issued by the sensor module; And saving sensor calibration data, wherein the sensor calibration data comprises pressure values Pi created during calibration and the associated sensor measured values pS(pi);

Separately calibrating (320) an electronic module (200) assigned to the sensor module (100), wherein calibrating the electronic module (200) comprises: Connecting an interface of the electronic module (200) to a calibration signal source; Issuing the recorded sensor measured values pS of the sensor calibration data to the electronic module interface using the calibration signal source; Recording measured value signals SM(pS) at the signaling interface; and

Preparing a calibration log (340) which assigns the measured value signals SM(pS(pi)) recorded when calibrating the electronic module to the defined pressure values Pi which are applied to the sensor module during sensor calibration.

2. The method as claimed in claim 1, wherein the sensor measured value is output as a digital signal at the sensor module interface.

3. The method as claimed in claim 1 or 2, wherein the measured value signal is a current signal, in particular a 4 to 20 mA current signal.

4. The method as claimed in one of the preceding claims, further comprising: Connecting the electronic module to the sensor module, in particular connecting the sensor module interface to the electronic module interface and/or installing the electronic housing on the sensor module housing.

5. The method as claimed in one of the preceding claims, further comprising:

Equalizing the sensor module, wherein the equalization takes place before calibration of the sensor module, wherein equalizing the sensor module comprises:

Inserting the sensor module into an equalizing device;
Applying multiple pressure values $p_i$ to at least one sensor module at different temperatures $T_j$;
Recording the associated first and second primary signals $S1(p_i, T_j)$ and $S2(p_i, T_j)$;
Determining a transducer transfer function W(S1, S2) based on the recorded signals for calculating sensor measured values;
$pS(S1, S2) = W(S1(p, T), S2(p, T))$
so that for all i, j, the sensor measured value $pS(S1(p_i, T_j), S2(p_i, T_j))$ corresponds to a specified linear sensor transfer function S(p) of the pressure p which was applied to the pressure sensor, except for a specified tolerance value dp1, wherein $S(p) = a_s * p + S_0$;
Implementing the determined transducer transfer function W(S1, S2) in the measuring circuit; and
Removing the sensor module from the equalizing device.

**6.** The method as claimed in claim 5, further comprising:

Fitting a process connection; and
Readjusting the sensor module;
wherein fitting a process connection and readjustment take place between equalization and calibration of the sensor module.

**7.** The method as claimed in claim 6, wherein readjusting the sensor module comprises:

Fitting the sensor module to a sensor module calibration station using the process connection;
Applying at least two pressure values $p_i$ to the sensor module; recording the associated sensor measured values $pS(p_i)$; and
Determining and implementing a readjusted transducer transfer function W(S1, S2) in the measuring circuit so that the sensor measured values $pS(p_i)$ for the at least two pressure measured values $p_i$ correspond to the specified sensor transfer function $S(p) = a_s * p + S_0$, except for a tolerance value dp2.

**8.** The method as claimed in claim 7,

wherein the sensor module is calibrated in the sensor module calibration station by Applying at least two pressure values $p_i$ to the sensor module again; Recording the associated sensor measured values $pS(p_i)$;
And saving the calibration data with the pairs of values Pi, $pS(p_i)$ in a memory.

**9.** The method as claimed in one of the preceding claims, wherein the pressure sensor module is equalized and/or calibrated over at least two defined measuring ranges,
wherein a first measuring range differs from a second measuring range in terms of its span, and/or wherein the average pressure difference between the pressure values used when calibrating the sensor module in the first measuring range differs from the average pressure difference between the pressure values used when calibrating the sensor module in the second measuring range.

**Revendications**

**1.** Procédé destiné à l'étalonnage de transmetteurs de pression (D),

un transmetteur de pression (D) étalonné selon le procédé présentant un module capteur (100) avec un raccord process (41) et un module électronique (200) couplé au module capteur (100) ;
le module capteur (100) comprenant un boîtier de module capteur (21), un circuit de mesure (61), un capteur de pression (1) avec un corps de déformation (2) et un transducteur pour fournir un premier signal primaire analogique, et un deuxième signal primaire analogique, lequel est fonctionnellement connecté au corps de déformation (1),
le capteur de pression (1) et le circuit de mesure (61) étant disposés dans le boîtier (21) ;
le corps de déformation (2) pouvant être soumis à une pression, le premier signal primaire S1 présentant une première dépendance d'une déformation du corps de déformation (2) fonction de la pression et d'une température du capteur de pression (1),
le deuxième signal primaire S2 présentant une deuxième dépendance de la déformation du corps de déformation fonction de la pression et de la température du capteur de pression, laquelle deuxième dépendance diffère de la première dépendance,
le circuit de mesure (61) étant conçu pour déterminer, en fonction du premier signal primaire S1 et du deuxième signal primaire S2, une valeur mesurée de capteur pS(S1, S2) et pour la mettre à disposition sur une interface de module capteur ;
le module électronique (200) présentant un boîtier électronique (221) et un circuit de communication (261) avec une interface de signalisation (264), lequel circuit de communication (261) est disposé dans le boîtier électronique (221), et lequel circuit de communication est raccordé à l'interface de module capteur (64) au moyen d'une interface de module électronique (262) pour recevoir la valeur mesurée de capteur pS de l'interface de module capteur (64), afin de déterminer un signal de valeur mesurée SM(pS) en fonction des valeurs mesurées de capteur pS et de délivrer ledit signal à l'interface de signalisation (264) pour émettre un signal de valeur mesurée SM(pS) en fonction de la valeur mesurée de capteur reçue ;
**caractérisé en ce que** le procédé comprend les étapes suivantes :

Étalonnage (320) du module capteur (100), l'étalonnage du module capteur (100) comprenant : l'application au module capteur d'une pluralité de valeurs de pression définies $p_i$ et l'acquisition des valeurs mesurées de capteur $pS(p_i)$ émises par le module capteur ; et l'enregistrement de données d'étalonnage de capteur, les données d'étalonnage de capteur comprenant des valeurs de pression $p_i$ appliquées lors de l'étalonnage et les valeurs mesurées de capteur $pS(p_i)$ correspondantes ;

Étalonnage (320) séparé d'un module électronique (200) associé au module capteur (100), l'étalonnage du module électronique (200) comprenant : la connexion d'une interface de module électronique (200) à une source de signaux d'étalonnage ; la sortie des valeurs mesurées de capteur enregistrées pS des données d'étalonnage de capteur vers l'interface de module électronique au moyen de la source de signaux d'étalonnage ; l'acquisition de signaux de valeurs mesurées SM(pS) au niveau de l'interface de signalisation ; et

Élaboration d'un protocole d'étalonnage (340), lequel associe les signaux de valeurs mesurées $SM(pS(p_i))$ acquises lors de l'étalonnage du module électronique aux valeurs de pression définies $p_i$ auxquelles le module capteur a été soumis lors de l'étalonnage des capteurs.

2. Procédé selon la revendication 1, pour lequel la valeur mesurée par le capteur est délivrée sous la forme d'un signal numérique à l'interface du module capteur.

3. Procédé selon la revendication 1 ou 2, pour lequel le signal de valeur mesurée est un signal courant, notamment un signal courant 4 ... 20 mA.

4. Procédé selon l'une des revendications précédentes, comprenant en outre : la connexion du module électronique au module capteur, notamment la connexion de l'interface du module capteur à l'interface du module électronique et/ou le montage du boîtier électronique sur le boîtier du module capteur.

5. Procédé selon l'une des revendications précédentes, comprenant en outre les étapes suivantes :

Compensation du module capteur, la compensation étant effectuée avant l'étalonnage du module capteur, la compensation du module capteur comprenant les étapes suivantes :

Mise en place du module capteur dans un dispositif de compensation ;
Application à au moins un module capteur de plusieurs valeurs de pression $p_i$ à plusieurs températures $T_j$ ;
Acquisition des premier et deuxième signaux primaires $S1(p_i, T_j)$ et $S2(p_i, T_j)$ correspondants ;
Détermination d'une fonction de transfert de transmetteur W(S1, S2) sur la base des signaux acquis pour calculer les valeurs mesurées de capteur ;

$$pS(S1, S2) = W(S1(p, T), S2(p, T))$$

de telle sorte que, pour toutes les paires i, j, la valeur mesurée de capteur $pS(S1(p_i, T_j), S2(p_i, T_j))$ correspond, à une valeur de tolérance spécifiée dp1 près, à une fonction de transfert de capteur linéaire prédéfinie S(p) de la pression p à laquelle le capteur de pression a été soumis,

$$\text{avec } S(p) = a_s * p + S_0 ;$$

Mise en oeuvre de la fonction de transfert du transmetteur déterminée W(S1, S2) dans le circuit de mesure ; et
Retrait du module capteur du dispositif de compensation.

6. Procédé selon la revendication 5, comprenant en outre les étapes suivantes :

Montage d'un raccord process ; et
Réajustement du module capteur ;
le montage d'un raccord process et le réajustement étant effectués entre la compensation et l'étalonnage du module capteur.

**7.** Procédé selon la revendication 6, pour lequel le réajustement du module capteur comprend :

Montage du module capteur au moyen du raccord process sur une station d'étalonnage de module capteur ;

Application au module capteur d'au moins deux valeurs de pression $p_i$, acquisition des valeurs mesurées de capteur $pS(p_i)$ correspondantes ; et

Détermination et mise en oeuvre d'une fonction de transfert de transducteur réajustée $W(S1, S2)$ dans le circuit de mesure, de telle sorte que les valeurs mesurées de capteur $pS(p_i)$ pour les au moins deux valeurs mesurées de pression $p_i$ correspondent, à une valeur de tolérance dp2 près, à la fonction de transfert de capteur $S(p) = a_s * p + S_0$ prédéfinie.

**8.** Procédé selon la revendication 7, pour lequel l'étalonnage du module capteur est effectué dans la station d'étalonnage du module capteur

en soumettant à nouveau le module capteur à au moins deux valeurs de pression $p_i$ ;

en acquérant les valeurs mesurées de capteur $pS(p_i)$ correspondantes ;

et en enregistrant les données d'étalonnage avec les paires de valeurs $p_i$, $pS(p_i)$ dans une mémoire de données.

**9.** Procédé selon l'une des revendications précédentes, pour lequel le module capteur de pression est compensé et/ou étalonné sur au moins deux gammes de mesure définies,

une première gamme de mesure se distinguant d'une deuxième gamme de mesure en ce qui concerne l'étendue, et/ou la différence de pression moyenne entre les valeurs de pression utilisées lors de l'étalonnage du module capteur dans la première gamme de mesure se distinguant de la différence de pression moyenne entre les valeurs de pression utilisées lors de l'étalonnage du module capteur dans la deuxième gamme de mesure.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170023428 A1